# EUROPEAN PATENT SPECIFICATION

(11) **EP 4 059 691 B1**
(45) Date of publication and mention of the grant of the patent: **20.08.2025**
(21) Application number: 20889673.8
(22) Date of filing: 20.11.2020
(51) Int. Cl.: B29C 45/14, B62D 25/00, B60R 13/00, B29C 45/16

(54) **METHOD FOR PRODUCING AN AUTOMOBILE PART**
VERFAHREN ZUR HERSTELLUNG EINES AUTOMOBILTEILS
PROCÉDÉ DE FABRICATION D'UNE PIÈCE D'AUTOMOBILE

(30) Priority: 20.11.2019 ES 201931013
(43) Date of publication of application: 21.09.2022
(73) Proprietor: Aludec S.A., 36828 Ponte Caldelas (ES)
(72) Inventor: LUMBRERAS PELÁEZ, Ernesto, 36828 Pontevedra (ES); ANTA VILLAR, Domingo, 36828 Pontevedra (ES)
(74) Representative: Linage González, Rafael
(86) International application number: PCT/ES2020/070725
(87) International publication number: WO 2021/099670

(56) References cited:
- EP-A1- 3 421 215
- US-A1- 2018 194 277
- US-A1- 2019 267 704
- US-A1- 2019 267 704
- US-B1- 6 264 869
- US-B1- 6 264 869

## Description

### Field of the invention

The present invention refers to a method for manufacturing an automotive part and, more specifically, an automotive part that is intended to be located in the operating range of a radar system arranged in a motor vehicle, without interfering with the operation of said radar system in the operating condition of the motor vehicle, the part in its finished condition having an external face visible from the outside of the motor vehicle and said visible external face including an area with a shiny metallic or metallised appearance, hereinafter called "motif".

Therefore, the invention relates to the automotive industry and, more specifically, to the bodywork sector.

### Background of the invention

In recent years, motor vehicles have been launched on the market that are equipped with a radar system to detect obstacles or the like in front of them using radar waves such as electromagnetic millimetre waves or the like.

In a forward-facing radar system that detects substantially static obstacles and moving objects (usually motor vehicles) in front of the motor vehicle, the antenna is preferably placed in the centre front position of the motor vehicle for best performance. Radar antennas can be installed externally to the motor vehicle, near the front grille of the motor vehicle, but radar antennas are preferably hidden due to their unaesthetic appearance and for protection from external environmental factors such as weather and airborne pollutants.

On the other hand, many motor vehicles include a part that is intended to be located in the operating range of a radar system arranged in the motor vehicle, without interfering with the operation of said radar system in the operating condition of the motor vehicle, the part having an external face visible from the outside of the motor vehicle and said visible external face including a motif or area having a shiny metallic or metallised appearance.

These parts are, in general, the emblem of the particular manufacturer of the motor vehicle and are located in the central front part of the motor vehicle, usually integrated in some way in the grille thereof, and thus just in front of the position in the which the antenna of the above discussed radar system is preferably arranged. For this reason, these parts are located in the operating range of the radar system and must not present any characteristic that makes them interfere with the operation of said radar system in the finished condition of the motor vehicle, while it is very common for them to incorporate chromed aspects or the like for the representation of the manufacturer's logo.

Such emblems, because of their relationship with the motor vehicle radar system, are often referred to as radome emblems.

Throughout this specification, the automotive part which is the subject matter of the present invention will sometimes be simply called a radome emblem for simplicity, without implying a limitation of the scope of the invention.

Conventionally, a plating or chrome treatment was applied to provide emblems with a metallic shine, but it is difficult to transmit radar waves through plated or chrome surfaces.

In addition, the operation of the radar system in the finished condition of the motor vehicle can also be affected by roughness on the external surfaces of the emblem, so these should be as smooth as possible.

Therefore, with the emergence of the aforementioned use of radars, for manufacturing emblems with a shiny metallic or metallised appearance, a technology is now being used that builds a thin film of a light metal such as indium (In), germanium (Ge) or the like by vacuum deposition, a thin film through which radar waves can be transmitted.

However, said thin film is built on a transparent plastic rigid substrate, smooth on the front and with a recessed region on the back representing the desired motif. The non-recessed region of the rear surface is then buffered in a dark colour, usually black. After that, the rear surface is PVD sprayed with the light metal, in such a way that the desired motif is revealed frontally in alignment with the recessed region. Finally, a rear counterpart is placed to achieve a smooth outer finish also on the back.

The manufacturing process for the radome emblem then becomes complicated, with several stages that require specific equipment. In addition, the joining phase of the counterpart to the rest of the assembly is critical, since all moisture must be previously removed from the assembly and then the joining must be made in such a way that it is completely watertight and remains so during the service life of the radome emblem, in order to avoid corrosion problems.

Therefore, the industry perceives the need to have an automotive part that is intended to be located in the operating range of a radar system arranged in the motor vehicle, without interfering with the operation of said radar system in the operating condition of the motor vehicle, the part having an external face visible from the outside of the motor vehicle and said visible external face including a motif or area having a shiny metallic or metallised appearance, and which further involves a simple production process.

### Summary of the invention

According to one aspect of the present invention, a method is provided for manufacturing an automotive part that is intended to be located in the operating range of a radar system arranged in the motor vehicle, without interfering with the operation of said radar system in the operating condition of the motor vehicle, the part in its finished condition having an external face visible from the outside of the motor vehicle and said visible external face including a motif or area having a shiny metallic or metallised appearance, the method comprising the following steps:
- arranging a sheet metallised with a light metal or metalloid, which has a visible face, which in the finished condition of the part will be at least partially visible from the outside of the motor vehicle in the operating condition of the motor vehicle, and a concealed face, opposite the visible face;
- thermoforming said sheet such that a relief corresponding to the motif is provided on the visible face;
- overmoulding a first thermoplastic onto the concealed face of the sheet such that, once cured, the first overmoulded thermoplastic fills the recess created by said relief and presents a smooth free surface;
- arranging one or more through-holes in the sheet and arranging one or more through-holes in the first overmoulded thermoplastic in alignment with the through-hole(s) of the sheet, such that at least one shared through-channel is formed; and
- overmoulding a second thermoplastic onto the visible face of the sheet, through at least one shared through-channel, in such a manner that said second overmoulded thermoplastic spreads around said relief in such a manner that a region not covered by the second overmoulded thermoplastic is obtained corresponding to the motif, producing a smooth surface shared by the motif and the free surface of the second overmoulded thermoplastic.

Preferably, a zone of reduced thickness adjacent to at least one shared through-channel is provided in the first overmoulded thermoplastic. Then, by overmoulding the second thermoplastic through the shared through-channel, a certain volume of said second thermoplastic remains in the housing created by said zone of reduced thickness, thereby anchoring the second overmoulded thermoplastic, once cured, to the rest of the assembly.

Preferably, the through-hole(s) in the sheet are made during the thermoforming phase thereof, so that, when the first thermoplastic is overmoulded onto the concealed face of the sheet, the sheet already has the relevant through-holes. The overmoulding of the first thermoplastic is then carried out with a die with protrusions in alignment with the holes in the sheet, to create the corresponding through-holes in the first thermoplastic.

An automotive part being manufactured by the method of the present invention can be intended to be located in the operating range of a radar system arranged in the motor vehicle, without interfering with the operation of said radar system in the operating condition of the motor vehicle, the part in its finished condition having an external face visible from the outside of the motor vehicle and such visible external face including a motif or area having a shiny metallic or metallised appearance.

### Brief description of the drawings

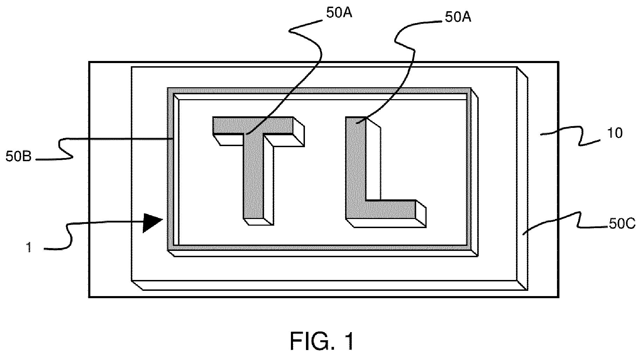

Figure 1 shows a thermoformed metallised sheet;

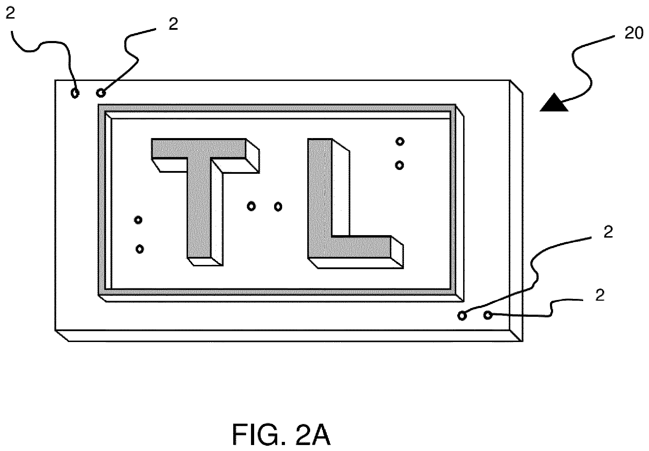

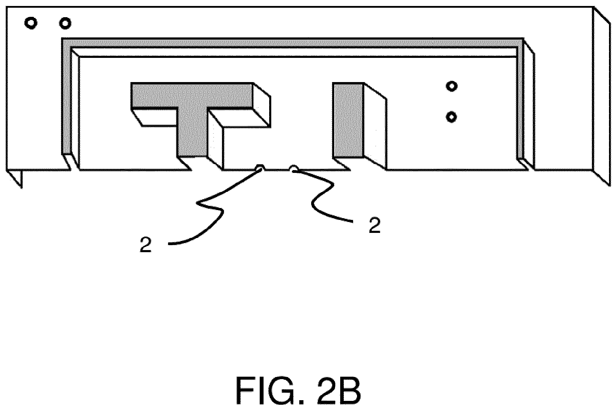

Figure 2A shows said metallised sheet once cut and perforated, and Figure 2B shows the same sheet in cross section;

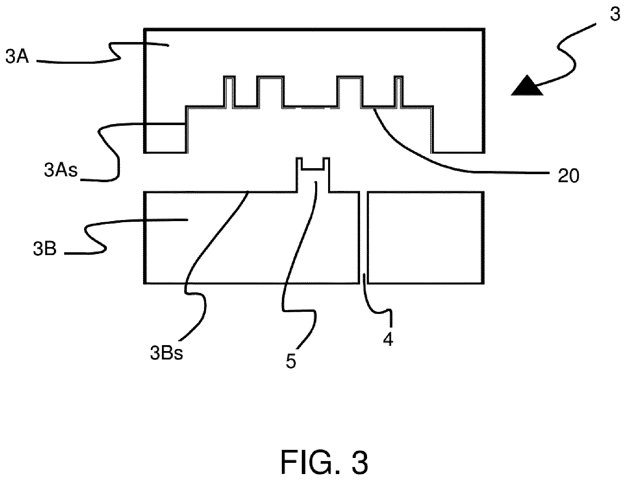

Figure 3 shows, in cross section, said cut and perforated metallised sheet once introduced into a first injection moulding die, with the die open, before injecting a first thermoplastic;

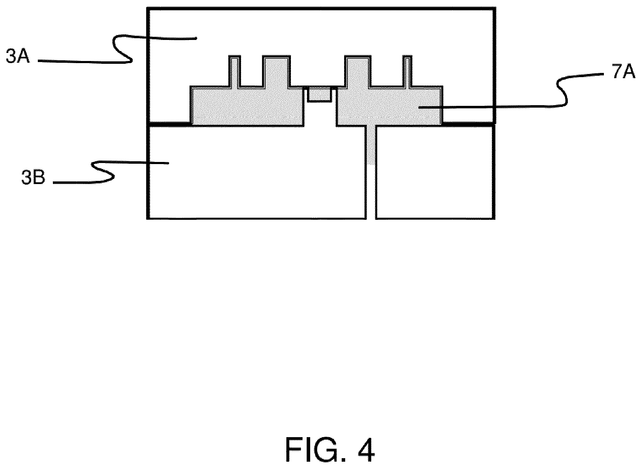

Figure 4 shows, in cross section, said cut and perforated metallised sheet, once introduced into said first injection moulding die, with the die closed, after injecting the first thermoplastic;

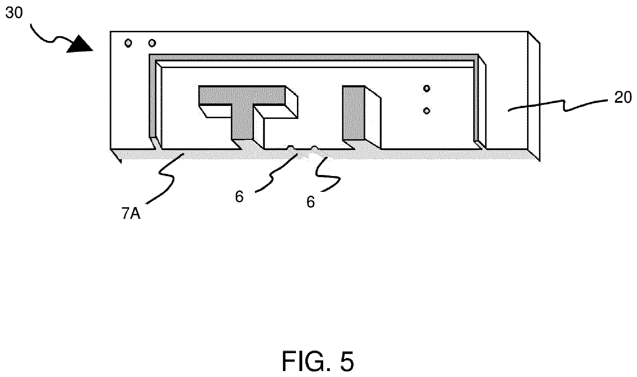

Figure 5 shows, in cross section, the element resulting from the first die, comprised of said cut and perforated metallised sheet and said first thermoplastic already injection moulded onto it;

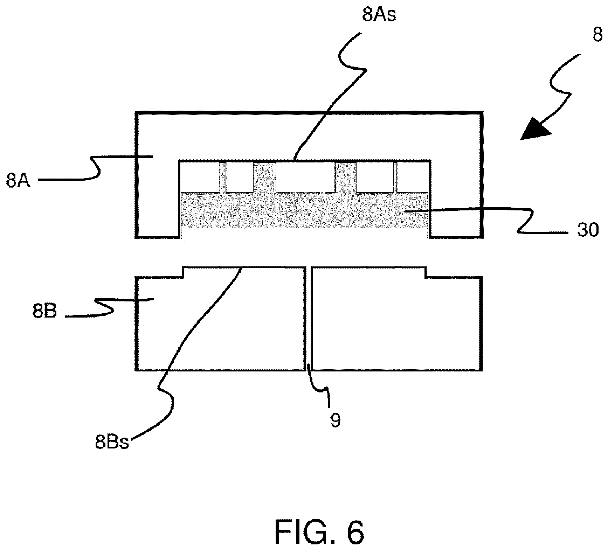

Figure 6 shows, in cross section, said element resulting from the first die, once introduced into a second injection moulding die, with the die open, before injecting a second thermoplastic;

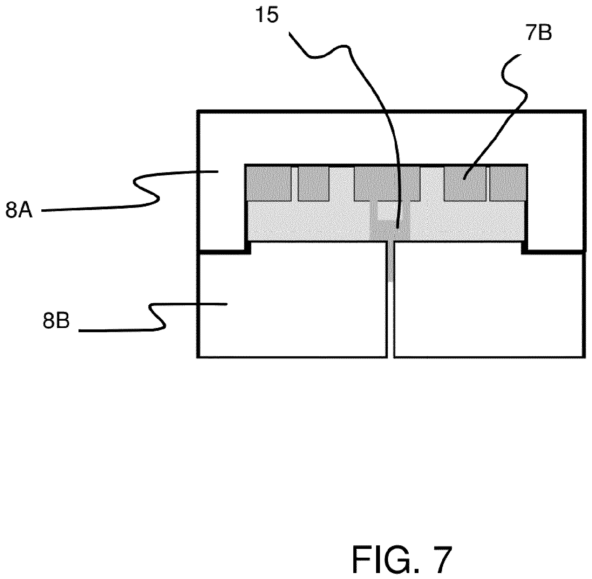

Figure 7 shows, in cross section, said element resulting from the first die, once introduced into said second injection moulding die, with the die closed, after injecting the second thermoplastic;

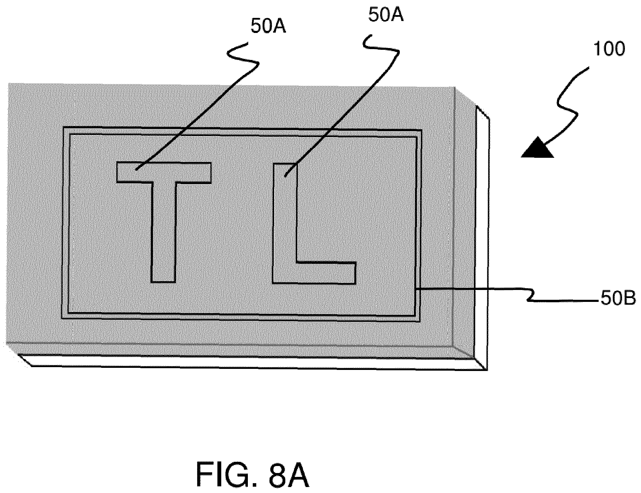

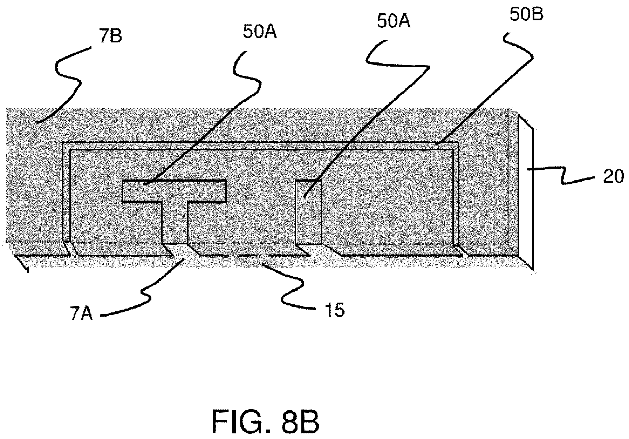

Figure 8A shows, in cross section, the radome emblem resulting from the second die, and Figure 8B shows the same radome emblem in cross section.

### Description of a preferred embodiment

The present embodiment of the method according to the invention is applied to the production of a radome emblem 100 with a motif 50A, 50B with a metallised or silver appearance.

The method starts from a rectangular metallised sheet 10. Specifically, a sheet is used comprising a layer of metallised PET (polyethylene terephthalate) 25 µm thick, covered on one side with a layer of PMMA (polymethyl methacrylate) 75 µm thick and on the other side with a transparent layer of ABS (acrylonitrile butadiene styrene) 250 µm thick, joined together by adhesive.

In this case, an aluminium (Al) metallised PET layer is used, but other light metals such as indium (In) or even some semi-metals such as germanium (Ge), or mixtures thereof, can also be used. Sheets of this type are commercially available, and it is a product that is usually known on the market as metallised PET or met PET.

Said sheet 10 is thermoformed to create in its centre a relief 1 corresponding to the motif 50A, 50B desired to be achieved. In the present embodiment, the motif 50A, 50B comprises the letters "TL" 50A although, obviously, it could be any other representation, whether a word, a number, a fanciful drawing or any other desired design. The motif of the present embodiment further comprises a rectangular line 50B framing said letters "TL" 50A. The sheet is thermoformed in a manner such that it also has a rectangular edge 50C that delimits the emblem and forms a kind of skirt around it. Next, the thermoformed sheet 10 is cut along said rectangular edge 50C, to obtain a rectangular thermoform 20, and is perforated with a plurality of through-holes 2.

The perforated rectangular thermoform 20 is then introduced into a first overmoulding die 3. A first mould 3A of the first die 3 receives the embossed face of the perforated rectangular thermoform 20 and has an operating surface 3As conjugated to such embossed face and remaining in contact with it; while a second mould 3B of the first die 3, which is provided with the injection channel 4, receives the opposite face of the perforated rectangular thermoform 20 and has an operating surface 3Bs that remains at a certain distance from the rectangular thermoform 20 during injection, in such a manner that a space is created for injection.

The operating surface 3Bs is generally smooth but has protrusions 5. Each of said protrusions 5 has a higher portion in alignment with a respective through-hole 2, and a lower portion extending adjacent to said higher portion. Specifically, in the present embodiment, each protrusion 5 has a lower portion extending to join another protrusion 5, in other words, each pair of protrusions 5 have respective higher portions but share a single shared lower portion.

The first die 3 is then closed and ABS 7A is injected through said injection channel 4 of said first die 3, obtaining an intermediate element 30 comprising the perforated rectangular thermoform 20 and the ABS 7A injected thereon.

Said protrusions 5 generate during injection, with their higher portion, holes 6 in the ABS 7A, thus forming shared through-channels 2, 6, and generate during injection, with their lower portion, a zone of reduced thickness of ABS 7A.

Next, said intermediate element 30 is introduced into a second overmoulding die 8. A first mould 8A of the second die 8 receives the embossed face of the intermediate element 30 and has a basically smooth operating surface 8As which remains in contact with the top of the relief 1 of the intermediate element 30; while a second mould 8B of the second die 8, which is provided with the injection channel 9, receives the free face of the ABS 7A of the intermediate element 30 and has a basically smooth operating surface 8Bs which remains in contact with such free face. Since the first mould 8A of the second die 8 has a smooth operating surface 8As which remains in contact with the top of the relief 1 of the intermediate element 30, a cavity to be injected is thereby provided around the relief 1.

The injection channel 9 of the second die 8 has as many outlets as there are shared through-channels 2, 6 of the intermediate element 30, and such outlets lead into said shared through-channels 2, 6 (only one outlet 9 is visible in the figures).

The second die 8 is then closed and PMMA 7B is injected through said injection channel 9 of said second die 8, obtaining the radome emblem 100 comprising the perforated rectangular thermoform 20, the ABS 7A injected on one side of the perforated rectangular thermoform 20, and the PMMA 7B injected on the other side of the perforated rectangular thermoform 20, the desired motif 50A, 50B being revealed on said radome emblem 100.

During injection, the injected PMMA 7B thus fills the cavity to be injected, around the relief 1 and also fills the zones of reduced thickness of ABS 7A, thus achieving mechanical anchoring of the assembly after the curing of the materials, without the need for further action or additional material, particularly in this embodiment a kind of staple 15 integral to the PMMA 7B.

Since several possible embodiments could be made of the present invention and since various changes could be made to the exemplary embodiments shown here without departing from the scope of the invention, it is to be understood that all subject matter described here or shown in the accompanying drawings is to be construed as illustrative and not in a limiting sense. The invention is set out in the appended set of claims.

## Claims

1. Method for manufacturing an automotive part (100) that is intended to be located in the operating range of a radar system arranged in the motor vehicle, without interfering with the operation of said radar system in the operating condition of the motor vehicle, the part (100) in its finished condition having an external face visible from the outside of the motor vehicle and such visible external face including a motif (50A, 50B) or area having a shiny metallic or metallised appearance, comprising the following steps:
- arranging a sheet (10) metallised with a light metal or metalloid, which has a visible face with a shiny metallic or metallised appearance, which in the finished condition of the part will be at least partially visible from the outside of the motor vehicle in the operating condition of the motor vehicle, and a concealed face, opposite the visible face;
- thermoforming said sheet (10) such that a relief (1) corresponding to the motif (50A, 50B) is provided on the visible face;
- overmoulding a first thermoplastic (7A) onto the concealed face of the sheet (10) such that, once cured, the first overmoulded thermoplastic (7A) fills the recess created by said relief (1) and presents a smooth free surface;
- arranging one or more through-holes (2) in the sheet and arranging one or more through-holes (6) in the first overmoulded thermoplastic (7A) in alignment with the through-hole(s) (2) of the sheet (10), such that at least one shared through-channel (2, 6) is formed; and **characterised by**
- overmoulding a second thermoplastic (7B) onto the visible face of the sheet (10), through at least one shared through-channel (2, 6), in such a manner that said second overmoulded thermoplastic (7B) spreads around said relief (1) in such a manner that a region with a shiny metallic or metallised appearance not covered by the second overmoulded thermoplastic (7B) is obtained, corresponding to the motif (50A, 50B), producing a smooth surface shared by the motif (50A, 50B) and the free surface of the second overmoulded thermoplastic (7B).

2. Method according to claim 1, **characterised in that** said sheet comprises a layer of metallised PET (polyethylene terephthalate), covered on one side with a layer of PMMA (polymethyl methacrylate) and on the other side with a layer of transparent ABS (acrylonitrile butadiene styrene), joined together by adhesive.

3. Method according to claim 2, **characterised in that** said metallised PET (polyethylene terephthalate) layer has a thickness of 25 µm, said PMMA (polymethyl methacrylate) layer has a thickness of 75 µm, and said transparent ABS (acrylonitrile butadiene styrene) layer has a thickness of 250 µm.

4. Method according to claim 2 or 3, **characterised in that** said sheet is a met PET.

5. Method according to any one of claims 2 to 4, **characterised in that** said metallised PET layer comprises a light metal, or a semi-light metal, or a mixture of light metals, or a mixture of semi-light metals, or a mixture of at least one light metal and at least one light semi-metal.

6. Method according to claim 5, **characterised in that** said metallised PET layer comprises aluminium (Al), or indium (In), or germanium (Ge), or a mixture thereof.

7. Method according to any one of the preceding claims, **characterised in that** said first thermoplastic (7A) is ABS and/or said second thermoplastic (7B) is PMMA.

8. Method according to any one of the preceding claims, **characterised in that** a zone of reduced thickness adjacent to at least one shared through-channel (2, 6) is provided in the first overmoulded thermoplastic (7A), so that, when overmoulding the second thermoplastic (7B) through the shared through-channel (2, 6), a certain volume (15) of said second thermoplastic (7B) remains in the housing created by said zone of reduced thickness, thereby anchoring the second overmoulded thermoplastic (7B), once cured, to the rest of the assembly.

9. Method according to any one of the preceding claims, **characterised in that** the hole(s) (2) of the sheet (10) are made during the thermoforming phase thereof, and **in that** the overmoulding of the first thermoplastic (7A) is then carried out with a die (3) with protrusions (5) in alignment with holes (2) of the sheet (10), to create said corresponding holes (6) in the first thermoplastic (7A).

10. Method according to claim 9, **characterised in that** each of said protrusions (5) has a higher portion in alignment with a respective through-hole (2), and a lower portion that extends adjacent to said higher portion, in such a manner that each of said protrusions (5) generates during injection, with its higher portion, a hole (6) in the first thermoplastic (7A), thus forming a shared through-channel (2, 6), and generates during the injection, with its lower portion, a zone of reduced thickness in the first thermoplastic (7A), in such a manner that during the injection the second thermoplastic (7B) spreads around the relief (1) and also fills the zones of reduced thickness of the first thermoplastic (7A), achieving a mechanical anchoring of the assembly after the curing of the materials, without the need for further action or additional material.

11. Method according to claim 10, **characterised in that** each protrusion (5) has a lower portion extending to join another protrusion (5), in such a manner that said mechanical anchoring is a kind of staple (15) integral with the second thermoplastic (7B).

## Patentansprüche

1. Verfahren zur Herstellung eines Automobilteils (100), das dazu bestimmt ist, sich im Betriebsbereich eines im Kraftfahrzeug angeordneten Radarsystems zu befinden, ohne den Betrieb des Radarsystems im Betriebszustand des Kraftfahrzeugs zu beeinträchtigen, wobei das Teil (100) in dessen fertigen Zustand eine von der Außenseite des Kraftfahrzeugs aus sichtbare Außenseite aufweist und diese sichtbare Außenseite ein Motiv (50A, 50B) oder einen Bereich umfasst, das/der ein metallisch glänzendes oder metallisierten Erscheinungsbild aufweist, umfassend die folgenden Schritte:
- Anordnen einer mit einem Leichtmetall oder Halbmetall metallisierten Folie (10), die eine Sichtseite mit einem metallisch glänzenden oder metallisierten Erscheinungsbild, die im fertigen Zustand des Teils im Betriebszustand des Kraftfahrzeugs von der Außenseite des Kraftfahrzeugs zumindest teilweise sichtbar ist, und eine der Sichtseite gegenüberliegende, verborgene Seite aufweist;
- Thermoformen der Folie (10), so dass auf der Sichtseite ein dem Motiv (50A, 50B) entsprechendes Relief (1) vorgesehen wird;
- Umspritzen eines ersten thermoplastischen Kunststoffs (7A) auf der verborgenen Seite der Folie (10), so dass der erste umspritzte thermoplastische Kunststoff (7A) nach dem Aushärten die durch das Relief (1) entstandene Vertiefung ausfüllt und eine glatte, freie Oberfläche bildet;
- Anordnen eines oder mehrerer Durchgangslöcher (2) in der Folie und Anordnen eines oder mehrerer Durchgangslöcher (6) in dem ersten umspritzten thermoplastischen Kunststoff (7A) in Ausrichtung mit dem/den Durchgangsloch/löchern (2) der Folie (10), so dass mindestens ein gemeinsamer Durchgangskanal (2, 6) gebildet wird; und **gekennzeichnet durch**
- Umspritzen eines zweiten thermoplastischen Kunststoffs (7B) auf der Sichtseite der Folie (10) durch mindestens einen gemeinsamen Durchgangskanal (2, 6), und zwar derart, dass sich der zweite umspritzte thermoplastische Kunststoff (7B) um das Relief (1) herum ausbreitet, und zwar derart, dass ein Bereich mit einem metallisch glänzenden oder metallisierten Erscheinungsbild entsteht, der nicht von dem zweiten umspritzten thermoplastischen Kunststoff (7B) bedeckt ist und dem Motiv (50A, 50B) entspricht, wodurch eine glatte Oberfläche entsteht, die dem Motiv (50A, 50B) und der freien Oberfläche des zweiten umspritzten thermoplastischen Kunststoffs (7B) gemeinsam ist.

2. Verfahren nach Anspruch 1, **dadurch gekennzeichnet, dass** die Folie eine Schicht aus metallisiertem PET (Polyethylenterephthalat) umfasst, die auf einer Seite mit einer Schicht aus PMMA (Polymethylmethacrylat) und auf der anderen Seite mit einer Schicht aus transparentem ABS (Acrylnitril-Butadien-Styrol) bedeckt ist und die durch Klebstoff miteinander verbunden sind.

3. Verfahren nach Anspruch 2, **dadurch gekennzeichnet, dass** die metallisierte PET-Schicht (Polyethylenterephthalat-Schicht) eine Dicke von 25 µm aufweist, die PMMA-Schicht (Polymethylmethacrylat-Schicht) eine Dicke von 75 µm aufweist und die transparente ABS-Schicht (Acrylnitril-Butadien-Styrol-Schicht) eine Dicke von 250 µm aufweist.

4. Verfahren nach Anspruch 2 oder 3, **dadurch gekennzeichnet, dass** die Folie ein Met-PET ist.

5. Verfahren nach einem der Ansprüche 2 bis 4, **dadurch gekennzeichnet, dass** die metallisierte PET-Schicht ein Leichtmetall oder ein Halbleichtmetall oder eine Mischung aus Leichtmetallen oder eine Mischung aus Halbleichtmetallen oder eine Mischung aus mindestens einem Leichtmetall und mindestens einem leichten Halbmetall umfasst.

6. Verfahren nach Anspruch 5, **dadurch gekennzeichnet, dass** die metallisierte PET-Schicht Aluminium (AI) oder Indium (In) oder Germanium (Ge) oder eine Mischung davon umfasst.

7. Verfahren nach einem der vorhergehenden Ansprüche, **dadurch gekennzeichnet, dass** der erste thermoplastische Kunststoff (7A) ABS ist und/oder der zweite thermoplastische Kunststoff (7B) PMMA ist.

8. Verfahren nach einem der vorhergehenden Ansprüche, **dadurch gekennzeichnet, dass** in dem ersten umspritzten thermoplastischen Kunststoff (7A) benachbart zu dem mindestens einen gemeinsamen Durchgangskanal (2, 6) eine Zone verringerter Dicke vorgesehen wird, so dass beim Umspritzen des zweiten thermoplastischen Kunststoffs (7B) durch den gemeinsamen Durchgangskanal (2, 6) ein bestimmtes Volumen (15) des zweiten thermoplastischen Kunststoffs (7B) in dem durch die Zone verringerter Dicke erzeugten Gehäuse verbleibt, wodurch der zweite umspritzte thermoplastische Kunststoff (7B) nach dem Aushärten am Rest der Anordnung verankert wird.

9. Verfahren nach einem der vorhergehenden Ansprüche, **dadurch gekennzeichnet, dass** das/die Loch/Löcher (2) der Folie (10) während der Thermoformungsphase derselben hergestellt werden und dass das Umspritzen des ersten thermoplastischen Kunststoffs (7A) dann mit einer Matrize (3) mit Vorsprüngen (5) in Ausrichtung mit den Löchern (2) der Folie (10) durchgeführt wird, um die entsprechenden Löcher (6) in dem ersten thermoplastischen Kunststoff (7A) zu erzeugen.

10. Verfahren nach Anspruch 9, **dadurch gekennzeichnet, dass** jeder der Vorsprünge (5) einen höheren Abschnitt, der mit einem entsprechenden Durchgangsloch (2) ausgerichtet ist, und einen niedrigeren Abschnitt aufweist, der sich benachbart zu dem höheren Abschnitt erstreckt, und zwar derart, dass jeder der Vorsprünge (5) beim Einspritzen mit seinem höheren Abschnitt ein Loch (6) im ersten thermoplastischen Kunststoff (7A) erzeugt und so einen gemeinsamen Durchgangskanal (2, 6) bildet und beim Einspritzen mit seinem niedrigeren Abschnitt eine Zone verringerter Dicke im ersten thermoplastischen Kunststoff (7A) erzeugt, derart, dass sich der zweite thermoplastische Kunststoff (7B) während des Einspritzens um das Relief (1) herum ausbreitet und auch die Zonen verringerter Dicke des ersten thermoplastischen Kunststoffs (7A) ausfüllt, wodurch nach dem Aushärten der Materialien eine mechanische Verankerung der Anordnung erreicht wird, ohne dass weitere Maßnahmen oder zusätzliches Material erforderlich sind.

11. Verfahren nach Anspruch 10, **dadurch gekennzeichnet, dass** jeder Vorsprung (5) einen unteren Abschnitt aufweist, der sich so erstreckt, dass er mit einem anderen Vorsprung (5) verbunden ist, und zwar derart, dass die mechanische Verankerung eine Art Klammer (15) ist, die fest mit dem zweiten thermoplastischen Kunststoff (7B) verbunden ist.

## Revendications

1. Procédé de fabrication d'une pièce (100) automobile destinée à être placée dans le champ de fonctionnement d'un système radar agencé dans le véhicule à moteur, sans perturber le fonctionnement dudit système radar dans l'état de fonctionnement du véhicule à moteur, la pièce (100) à l'état fini présentant une face externe visible depuis l'extérieur du véhicule à moteur et cette face externe visible comportant un motif (50A, 50B) ou une zone d'aspect métallique ou métallisé brillant, comprenant les étapes suivantes :
- l'agencement d'une feuille (10) métallisée avec un métal ou un métalloïde léger, qui présente une face visible d'aspect métallique ou métallisé brillant, laquelle, dans l'état fini de la pièce, sera au moins partiellement visible de l'extérieur du véhicule à moteur dans l'état de fonctionnement du véhicule à moteur, et une face cachée, opposée à la face visible ;
- le thermoformage de ladite feuille (10), de manière à ce qu'un relief (1) correspondant au motif (50A, 50B) soit prévu sur la face visible ;
- le surmoulage d'un premier thermoplastique (7A) sur la face cachée de la feuille (10), de sorte que, une fois durci, le premier thermoplastique (7A) surmoulé remplisse l'évidement créé par ledit relief (1) et présente une surface libre lisse ;
- l'agencement d'un ou plusieurs trous traversants (2) dans la feuille et l'agencement d'un ou plusieurs trous traversants (6) dans le premier thermoplastique (7A) surmoulé en alignement avec le ou les trous traversants (2) de la feuille (10), de sorte qu'au moins un canal traversant (2, 6) partagé soit formé ; et **caractérisé par**
- le surmoulage d'un second thermoplastique (7B) sur la face visible de la feuille (10), à travers au moins un canal traversant (2, 6) partagé, de sorte que ledit second thermoplastique (7B) surmoulé s'étale autour dudit relief (1), de sorte qu'une zone d'aspect métallique ou métallisé brillant non recouverte par le second thermoplastique (7B) surmoulé soit obtenue, correspondant au motif (50A, 50B), ce qui produit une surface lisse partagée par le motif (50A, 50B) et la surface libre du second thermoplastique (7B) surmoulé.

2. Procédé selon la revendication 1, **caractérisé en ce que** ladite feuille comprend une couche de PET (polyéthylène téréphtalate) métallisé, recouverte sur une face d'une couche de PMMA (polyméthacrylate de méthyle) et sur l'autre face d'une couche d'ABS (acrylonitrile butadiène styrène) transparent, assemblées entre elles par adhésif.

3. Procédé selon la revendication 2, **caractérisé en ce que** ladite couche de PET (polyéthylène téréphtalate) métallisé a une épaisseur de 25 µm, ladite couche de PMMA (polyméthacrylate de méthyle) a une épaisseur de 75 µm, et ladite couche d'ABS (acrylonitrile butadiène styrène) transparent a une épaisseur de 250 µm.

4. Procédé selon la revendication 2 ou 3, **caractérisé en ce que** ladite feuille est un PET métallisé.

5. Procédé selon l'une quelconque des revendications 2 à 4, **caractérisé en ce que** ladite couche de PET métallisé comprend un métal léger, ou un métal semi-léger, ou un mélange de métaux légers, ou un mélange de métaux semi-légers, ou un mélange d'au moins un métal léger et d'au moins un métal semi-léger.

6. Procédé selon la revendication 5, **caractérisé en ce que** ladite couche de PET métallisé comprend de l'aluminium (AI), ou de l'indium (In), ou du germanium (Ge), ou un mélange de ceux-ci.

7. Procédé selon l'une quelconque des revendications précédentes, **caractérisé en ce que** ledit premier thermoplastique (7A) est de l'ABS et/ou ledit second thermoplastique (7B) est du PMMA.

8. Procédé selon l'une quelconque des revendications précédentes, **caractérisé en ce qu'**une zone d'épaisseur réduite adjacente à au moins un canal traversant (2, 6) partagé est prévue dans le premier thermoplastique (7A) surmoulé, de sorte que, lors du surmoulage du second thermoplastique (7B) à travers le canal traversant (2, 6) partagé, un certain volume (15) dudit second thermoplastique (7B) reste dans le logement créé par ladite zone d'épaisseur réduite, ce qui ancre le second thermoplastique (7B) surmoulé, une fois durci, au reste de l'ensemble.

9. Procédé selon l'une quelconque des revendications précédentes, **caractérisé en ce que** le ou les trous (2) de la feuille (10) sont réalisés lors de la phase de thermoformage de celle-ci, et **en ce que** le surmoulage du premier thermoplastique (7A) est ensuite réalisé avec une matrice (3) présentant des protubérances (5) en alignement avec les trous (2) de la feuille (10), pour créer lesdits trous (6) correspondants dans le premier thermoplastique (7A).

10. Procédé selon la revendication 9, **caractérisé en ce que** chacune desdites protubérances (5) présente une portion supérieure alignée avec un trou traversant (2) respectif, et une portion inférieure qui s'étend adjacente à ladite portion supérieure, de sorte que chacune desdites protubérances (5) génère, pendant l'injection, avec sa portion supérieure, un trou (6) dans le premier thermoplastique (7A), formant ainsi un canal traversant (2, 6) partagé, et génère pendant l'injection, avec sa portion inférieure, une zone d'épaisseur réduite dans le premier thermoplastique (7A), de sorte que, pendant l'injection, le second thermoplastique (7B) s'étale autour du relief (1) et remplisse également les zones d'épaisseur réduite du premier thermoplastique (7A), réalisant un ancrage mécanique de l'ensemble après le durcissement des matériaux, sans nécessiter d'intervention ultérieure ni de matériau supplémentaire.

11. Procédé selon la revendication 10, **caractérisé en ce que** chaque protubérance (5) présente une portion inférieure s'étendant pour rejoindre une autre protubérance (5), de sorte que ledit ancrage mécanique soit une sorte d'agrafe (15) solidaire du second thermoplastique (7B).
